# EUROPEAN PATENT SPECIFICATION

(11) **EP 4 425 394 B1**
(45) Date of publication and mention of the grant of the patent: **02.09.2026**
(21) Application number: 21962379.0
(22) Date of filing: 27.10.2021
(51) Int. Cl.: H04L 67/12, H04L 67/306, H04L 67/52, H04W 4/029, G06Q 10/06, H04W 4/20, H04W 4/33, H04W 4/80, H04W 64/00

(54) **LOCATION MANAGEMENT SYSTEM, WIRELESS TERMINAL, LOCATION MANAGEMENT METHOD, AND PROGRAM**
STANDORTVERWALTUNGSSYSTEM, DRAHTLOSES ENDGERÄT, STANDORTVERWALTUNGSVERFAHREN UND PROGRAMM
SYSTÈME DE GESTION D'EMPLACEMENT, TERMINAL SANS FIL, PROCÉDÉ DE GESTION D'EMPLACEMENT ET PROGRAMME

(43) Date of publication of application: 04.09.2024
(73) Proprietor: MITSUBISHI ELECTRIC CORPORATION, Chiyoda-ku Tokyo 100-8310 (JP)
(72) Inventor: KUROIWA Takeru, Tokyo 100-8310 (JP)
(74) Representative: Studio Torta S.p.A.
(86) International application number: PCT/JP2021/039645
(87) International publication number: WO 2023/073830

(56) References cited:
- WO-A1-2005/086375
- WO-A1-2016/122618
- JP-A- 2007 102 392
- JP-A- 2017 050 000
- US-A1- 2004 148 039

## Description

### Technical Field

The present disclosure relates to a location management system, a wireless terminal, a location management method, and a program.

### Background Art

Various proposals are made heretofore that relate to a technique for management of a location of a person present in a building. For example, Patent Literature 1 discloses a whereabouts management system that includes mobile terminals to be carried by staff members, multiple wireless servers that are variously arranged at sites in an office building, a main server, and multiple client computers that are usable by each of the staff members and are each hereinafter referred to as the "client".

In this whereabouts management system, each of the wireless servers, in response to the mobile terminal carried by a staff member of the staff members entering a communication range of the wireless server, communicates with this mobile terminal, acquires information for identification of this mobile terminal and a user of this mobile terminal from this mobile terminal, and transmits, to the main server, information including the acquired information and information for identification of the wireless server.

The main server includes a worker table storing names, assigned sections, and the like of the staff members, a wireless server table storing installation locations of the wireless servers, and a location information table storing whereabouts information of the staff members, and upon receiving the aforementioned information from the wireless server, updates the whereabouts information of the corresponding staff member based on the received information. The staff members can check the whereabouts information of a desired staff member by accessing the main server through operation of the client.

### Citation List

### Patent Literature

Patent Literature 1: Unexamined Japanese Patent Application Publication No. 2003-219453
Patent Literature 2: US 2004/148039
Patent Literature 3: WO 2016/122618 A1

### Summary of Invention

### Technical Problem

In the aforementioned whereabouts management system, a wireless server dedicated for this system is arranged at each of multiple locations in a building. That is, conventional systems for management of a location of a person require installation of multiple dedicated devices for detecting the location of the person and therefore have a problem of an increase in installation cost and engineering cost.

The present disclosure is made to solve the aforementioned problems, and an objective of the present disclosure is to provide a location management system and the like that can achieve low-cost management of a location of a person in a building.

### Solution to Problem

To achieve the aforementioned objective, a location management system according to the present disclosure includes a wireless terminal and a facility device installed in a building. The wireless terminal includes storage means for storing user identification information of a user of the wireless terminal, communication means for performing wireless communication with the facility device, location information detection means for detecting, based on the wireless communication with the facility device, location information of the wireless terminal, and person location information transmission means for transmitting, to the facility device, person location information that includes the user identification information and the location information of the wireless terminal. The facility device includes communication means for performing wireless communication with the wireless terminal and storage means for storing the person location information received from the wireless terminal.

### Advantageous Effects of Invention

According to the present disclosure, low-cost management of a location of a person in a building is achievable.

### Brief Description of Drawings

FIG. 1 illustrates overall configuration of a location management system according to Embodiment 1;
FIG. 2 is a block diagram illustrating hardware configuration of a wireless terminal according to Embodiment 1;
FIG. 3 is a block diagram illustrating hardware configuration of a facility device according to Embodiment 1;
FIG. 4 is a block diagram illustrating functional configuration of the wireless terminal and the facility device according to Embodiment 1;
FIG. 5 is a flowchart illustrating a sequence of person location information transmission processing executed by the wireless terminal according to Embodiment 1;
FIG. 6 is a flowchart illustrating a sequence of user location display processing executed by the wireless terminal according to Embodiment 1;
FIG. 7 is a flowchart illustrating a sequence of user notification display processing executed by the wireless terminal according to Embodiment 1;
FIG. 8 illustrates overall configuration of a location management system according to Embodiment 2;
FIG. 9 is a block diagram illustrating functional configuration of a wireless terminal and a facility device according to Embodiment 2;
FIG. 10 is a flowchart illustrating a sequence of contact information display processing executed by the wireless terminal according to Embodiment 2;
FIG. 11 is a flowchart illustrating a sequence of area person count display processing executed by the wireless terminal according to Embodiment 2;
FIG. 12 illustrates overall configuration of a location management system according to Embodiment 3;
FIG. 13 is a block diagram illustrating hardware configuration of a wireless terminal according to Embodiment 3;
FIG. 14 is a block diagram illustrating hardware configuration of a server according to Embodiment 3;
FIG. 15 is a block diagram illustrating functional configuration of the wireless terminal, a facility device and the server according to Embodiment 3;
FIG. 16 is a flowchart illustrating a sequence of person location information transmission processing executed by the wireless terminal according to Embodiment 3;
FIG. 17 is a flowchart illustrating a sequence of user location display processing executed by the wireless terminal according to Embodiment 3; and
FIG. 18 is a flowchart illustrating a sequence of user notification display processing executed by the wireless terminal according to Embodiment 3.

### Description of Embodiments

Hereinafter, embodiments of the present disclosure are described in detail with reference to the drawings.

### Embodiment 1

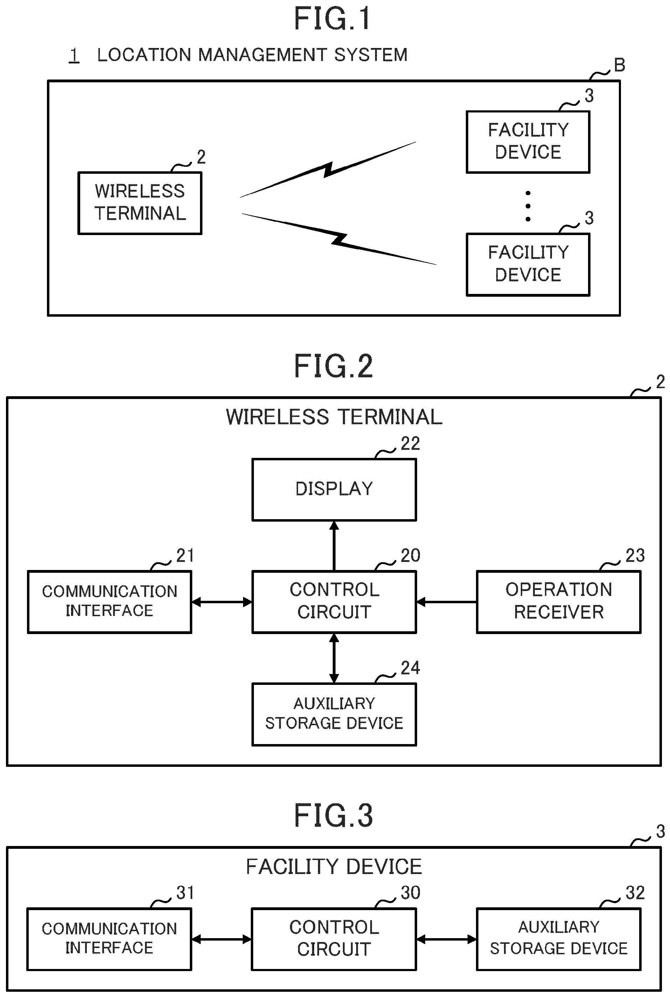

FIG. 1 illustrates overall configuration of a location management system 1 according to Embodiment 1. The location management system 1 is an example of a location management system according to the present disclosure and is a system for managing locations within a building B of users using the building B. The building B is an office building, a factory, a lodging facility, a commercial facility, a public facility, or the like. As illustrated in FIG. 1, the location management system 1 includes a wireless terminal 2 carried by each of the users and at least three facility devices 3.

### Wireless Terminal 2

The wireless terminal 2 is an example of a wireless terminal according to the present disclosure. The wireless terminal 2 is a portable electronic device, such as a smartphone and tablet terminal, that is carried by each of the users who use the building B. As illustrated in FIG. 2, the wireless terminal 2 includes, as hardware components, a control circuit 20, a communication interface 21, a display 22, an operation receiver 23, and an auxiliary storage device 24.

The control circuit 20 performs overall control of the wireless terminal 2. The control circuit 20 includes, although not illustrated, a central processing unit (CPU), a read only memory (ROM) and a random access memory (RAM). Functions of the wireless terminal 2 that are achieved by the control circuit 20 are described later in detail.

The communication interface 21 is an example of communication means that is included in the wireless terminal according to the present disclosure. The communication interface 21 is an interface for wireless communication with the facility devices 3 by communication in an ad hoc manner and is an interface for performing, for example, Bluetooth^{®} low energy (BLE) communication.

The display 22 is an example of a display that is included in the wireless terminal according to the present disclosure. The display 22 includes a display device such as a liquid crystal display and an organic electro luminescence (EL) display. The display 22 displays, under control by the control circuit 20, various types of screens or the like. The operation receiver 23 includes one or more input devices, such as a pushbutton, a touch panel and a touch pad, receives an input operation from the user, and sends to the control circuit 20 a signal according to the received operation.

The auxiliary storage device 24 includes, for example, readable/rewritable nonvolatile semiconductor memory that is an electrically erasable programmable read-only memory (EEPROM), a flash memory, or the like. The auxiliary storage device 24 stores (i) various programs including an application program, for utilizing a location management service provided by the location management system 1, that is hereinafter referred to as the "location management application" and (ii) data for use in execution of these programs.

The location management application and an update program for updating the location management application is acquirable by the wireless terminal 2, through communication, from a server that is operated by a manufacturer, a vendor, or the like of the facility devices 3, other program distribution server, or the like. These programs can be distributed by storage in a computer-readable recording medium, such as a compact disc read only memory (CD-ROM), a digital versatile disc (DVD), a magneto-optical disc, a universal serial bus (USB) memory, a hard disk drive (HDD), a solid state drive (SSD) and a memory card. The wireless terminal 2 may read out and acquire, upon direct or indirect attachment thereto of such recording medium, the location management program and the update program from this recording medium.

### Facility Device 3

The facility device 3 is an example of a facility device according to the present disclosure. The facility device 3 is, for example, an indoor unit of an air conditioner, an illumination device, or the like, and three or more of the facility devices 3 are installed in the building B. As illustrated in FIG. 3, the facility device 3 includes, as hardware components, a control circuit 30, a communication interface 31 and an auxiliary storage device 32. Each of the facility devices 3 is taken to include, in addition to these components, a hardware component for achievement of fundamental functions of the facility device 3, such as a function for performing air conditioning in the case of an indoor unit or a function for performing illumination in the case of an illumination device.

The control circuit 30 includes a CPU, a ROM and a RAM that are not illustrated, and controls data transfer to and from the wireless terminal 2. Functions of the facility devices 3 that are achieved by the control circuit 30 are described later in detail.

The communication interface 31 is an example of communication means included in the facility device according to the present disclosure. The communication interface 31 is an interface for wireless communication with the wireless terminal 2 by communication in an ad hoc manner and is an interface for performing, for example, BLE communication.

The auxiliary storage device 32 includes, for example, readable/rewritable nonvolatile semiconductor memory that is an EEPROM, a flash memory, or the like. The auxiliary storage device 32 stores (i) an information transfer program that is a program for performing transfer of information to and from the wireless terminal 2 and (ii) data for use in execution of the information transfer program.

The information transfer program and an update program for updating the information transfer program is acquirable by the facility device 3, through communication, from a server that is operated by a manufacturer, a vendor, or the like of the facility devices 3, other device, or the like. These programs can be distributed by storage in a computer-readable recording medium, such as a CD-ROM, a DVD, a magneto-optical disc, a USB memory, an HDD, an SSD and a memory card. The facility device 3 may read out and acquire, upon direct or indirect attachment thereto of such recording medium, the information transfer program and the update program from this recording medium.

### Functional Configuration of the Wireless Terminal 2 and the Facility Device 3

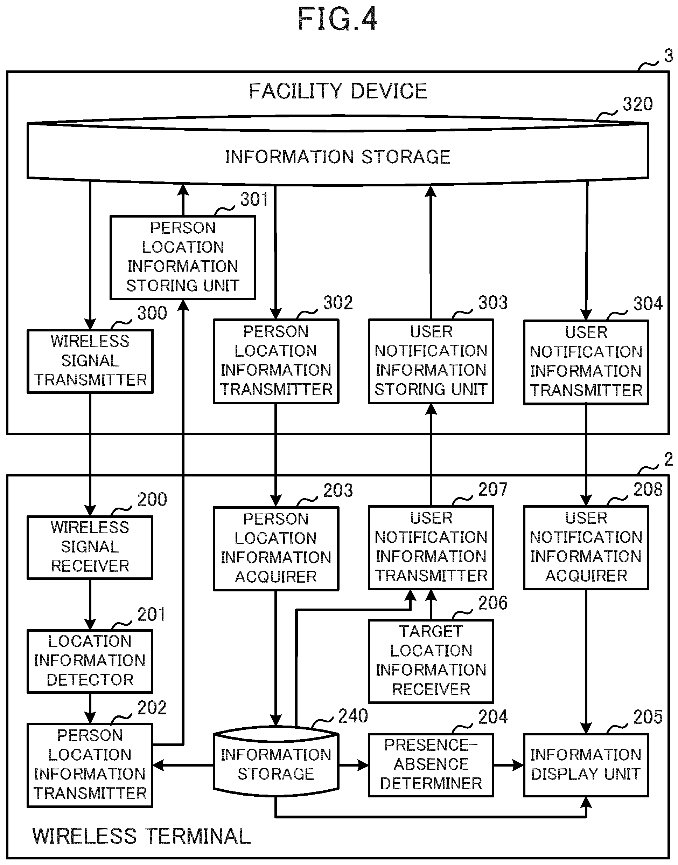

FIG. 4 is a block diagram illustrating functional configuration of the wireless terminal 2 and the facility device 3. As illustrated in FIG. 4, the wireless terminal 2 includes a wireless signal receiver 200, a location information detector 201, a person location information transmitter 202, a person location information acquirer 203, a presence-absence determiner 204, an information display unit 205, a target location information receiver 206, a user notification information transmitter 207 and a user notification information acquirer 208. These functional elements are achieved by execution, by the control circuit 20, of the aforementioned location management application stored in the auxiliary storage device 24.

The facility device 3 includes a wireless signal transmitter 300, a person location information storing unit 301, a person location information transmitter 302, a user notification information storing unit 303 and a user notification information transmitter 304. These functional elements are achieved by execution, by the control circuit 30, of the aforementioned information transfer program stored in the auxiliary storage device 32.

The wireless signal transmitter 300 of each of the facility devices 3 reads out installation location information that indicates an installation location of the local facility device 3 and that is stored in an information storage 320, for example, XY coordinates within the building B, and periodically transmits, via the communication interface 31, a wireless signal including the read-out installation location information. The information storage 320 is an example of storage means included in the facility device according to the present disclosure and is a memory region provided by the auxiliary storage device 32.

The wireless signal receiver 200 of the wireless terminal 2 receives the aforementioned wireless signal transmitted from each of the facility devices 3 and measures and acquires a radio field strength, also called an electric field strength, at receipt of this wireless signal. In the present embodiment, the wireless signal receiver 200 measures, as the radio field strength, a received signal strength indicator (RSSI) of the wireless signal received from each of the facility devices 3.

The location information detector 201 is an example of location information detection means according to the present disclosure. The location information detector 201 detects location information indicating a current location of the wireless terminal 2. Specifically, the location information detector 201 extracts and acquires the installation location information included in the wireless signal received by the wireless signal receiver 200 and stores in the RAM of the control circuit 20 the acquired installation location information in association with the radio field strength of the wireless signal that is acquired by the wireless signal receiver 200. Then the location information detector 201 detects local location information, that is, location information of the wireless terminal 2, using the principle of triangulation that is also called "three-point measurement" based on sets of the installation location information and the radio field strength for the three or more facility devices 3. The location information is, for example, XY coordinates within the building B.

The person location information transmitter 202 is an example of person location information transmission means according to the present disclosure. The person location information transmitter 202 reads out, from an information storage 240, a user ID that is identification (ID) of the user of the wireless terminal 2, and transmits to each of the facility devices 3, via the communication interface 21, person location information including the read-out user ID, the location information detected by the location information detector 201, and time information indicating a current time. The information storage 240 is an example of storage means included in the wireless terminal according to the present disclosure and is a memory region provided by the auxiliary storage device 24. The user ID is an example of user identification information according to the present disclosure. The person location information transmitter 202 may perform unicast transmission of the person location information to each of the facility devices 3 as a destination of the wireless signal, or may perform broadcast transmission of the person location information without designation of the facility devices 3.

The person location information storing unit 301 of the facility devices 3 receives via the communication interface 31 the person location information transmitted from the wireless terminal 2 and stores the received person location information in the information storage 320.

The person location information acquirer 203 of the wireless terminal 2 is an example of person location information acquisition means according to the present disclosure. The person location information acquirer 203 acquires from each of the facility devices 3 the person location information of each of the users periodically, for example, at one-minute intervals. Specifically, the person location information acquirer 203 sends notification for requesting the person location information that is hereinafter referred to as the "person location information request notification" via the communication interface 21 by unicast transmission to each of the facility devices 3 or by broadcast transmission. The person location information transmitter 302 of each of the facility devices 3 transmits, upon receiving the above person location information request notification via the communication interface 31, to the wireless terminal 2 as a transmission source of this person location information request notification, the person location information for each user ID that is stored in the information storage 320.

The person location information acquirer 203 receives and acquires via the communication interface 21 the person location information for each user ID that is transmitted from each of the facility devices 3, and the person location information acquirer 203 stores in the information storage 240 the acquired person location information for each user ID such that (i) latest person location information, that is, the person location information including the time information that is the latest, is stored in the information storage 240 for each user ID and (ii) duplicate storage in the information storage 240 of the person location information that is identical in content, in other words, the person location information that is identical in the user ID, the location information and the time information, does not occur.

The presence-absence determiner 204 is an example of presence-absence determination means according to the present disclosure. The presence-absence determiner 204 determines for each of the users whether the user is present in the building B. Specifically, the presence-absence determiner 204 (i) reads out the person location information of each of the users that is stored in the information storage 240, (ii) compares the time indicated by the time information included in each set of person location information against a current time, (iii) when a difference obtained by the comparison is equal to or shorter than a predetermined time period, for example, two minutes, determines that the corresponding user is present in the building B, and (iv) when the difference between the time indicated by the time information and the current time is longer than the predetermined time period, determines that the corresponding user is absent from the building B.

The information display unit 205 is an example of information display means according to the present disclosure. The information display unit 205 displays, on the display 22 in a predetermined manner, a location of the user present in the building B. For example, the information display unit 205 performs mapping to display, based on the person location information corresponding to this user, while displaying a floor map of the building B, on the floor map an icon indicating this user, such as an icon denoted by a user name that is a full name of this user, a family name of this user, an abbreviation of a name of this user, or the like. The information display unit 205 may display on the display 22 a list associating the user name with a name of a place corresponding to the location of this user, such as "meeting room A" or "workroom A".

The wireless terminal 2 is taken to (i) acquire data relating to the floor map of the building B and data associating the user ID and the user name from other device by communication or acquire the data by reading out from a recording medium that is directly or indirectly attached to the local terminal and (ii) stores the data in the information storage 240 in advance.

For the user who is absent from the building B, the information display unit 205 displays on the display 22 that this user is absent.

The target location information receiver 206 is an example of target location information receiving means according to the present disclosure. The target location information receiver 206 receives, from the user, designation of a desired user among the users who are present in the building B other than the user and designation of target location information. For example, the target location information receiver 206 may receive the designation of the desired user in response to selection, by the user, of information that is displayed on the display 22 by the information display unit 205 and that indicates locations of the users present in the building B, such as the aforementioned icon, an item corresponding to each of the users in the list displayed as above, or the like. The target location information receiver 206 may display on the display 22 a list of place names using, for example, a list box, and receive the designation of the target location information in response to selection, by the user, of a name of a desired place, or may receive the designation of the target location information in response to operation by the user tapping a location on the displayed floor map.

The target location information receiver 206 may display in the display 22 a screen with a field for entry of the user name and a field for entry of the target location information and may receive the designation of the desired user and the target location information in response to text input, by the user, of the desired user name and the target location information. In this case, the target location information that is input by the user may be coordinates or may be a place name.

The user notification information transmitter 207 is an example of user notification information transmission means according to the present disclosure. Upon the target location information receiver 206 receiving from the user the designation of the desired user and the target location information, the user notification information transmitter 207 transmits, via the communication interface 21 by unicast transmission to each of the facility devices 3 or by broadcast transmission, user notification information that includes (i) the user ID of the designated user that is hereinafter referred to as the "notification target user ID", (ii) the target location information, (iii) the user ID of the user of the wireless terminal 2, in other words, the user having performed the designation, that is hereinafter referred to as the "notification source user ID", and (iv) the time information. In the case in which multiple users are designated, the user notification information transmitter 207 may include, in one set of the user notification information, the user ID of each designated user as the notification target user ID, or may transmit, to each of the facility devices 3, multiple sets of the user notification information that each correspond to a corresponding single user of the designated users.

The user notification information storing unit 303 of each of the facility devices 3 receives via the communication interface 31 the user notification information transmitted from the wireless terminal 2 and stores the received user notification information in the information storage 320.

The user notification information acquirer 208 of the wireless terminal 2 acquires from each of the facility devices 3 the user notification information addressed to the user of the wireless terminal 2 periodically, for example, at one-minute intervals. Specifically, the user notification information acquirer 208 sends notification for requesting the user notification information that is hereinafter referred to as the "user notification information request notification" via the communication interface 21 by unicast transmission to each of the facility devices 3 or by broadcast transmission. The user notification information request notification includes the user ID of the user of the wireless terminal 2. The user notification information transmitter 304 of each of the facility devices 3 retrieves, upon receiving the user notification information request notification from the wireless terminal 2 via the communication interface 31, from all of the user notification information stored in the information storage 320, the user notification information including the notification target user ID that is identical to the user ID included in this user notification information request notification.

In the case in which such user notification information as above exists, the user notification information transmitter 304 transmits this user notification information via the communication interface 31 to the wireless terminal 2 that is the transmission source of the user notification information request notification. In this case, the user notification information transmitter 304 deletes the user notification information from the information storage 320. Conversely, in the case in which such user notification information as above does not exist, the user notification information transmitter 304 makes no reply to the wireless terminal 2 that is the transmission source of the user notification information request notification. In the case of such non-existence, the user notification information transmitter 304 may transmit, via the communication interface 31 to the wireless terminal 2 that is the transmission source of the user notification information request notification, reply information indicating that the corresponding user notification information does not exist.

In the case in which the user notification information is transmitted from any of the facility devices 3, the user notification information acquirer 208 receives and acquires this user notification information via the communication interface 21, and supplies the acquired user notification information to the information display unit 205. Thereafter, when the user notification information that is identical in content is received, the user notification information acquirer 208 discards this user notification information.

The information display unit 205 displays, on the display 22 in a predetermined manner, the user notification information acquired by the user notification information acquirer 208. For example, the information display unit 205 displays, on the display 22, notification of issuance of an instruction, from the user corresponding to the notification source user ID, to gather at a place indicated by the target location information, such as the message "at 10: 50, YAMADA issued an instruction to gather at the meeting room A".

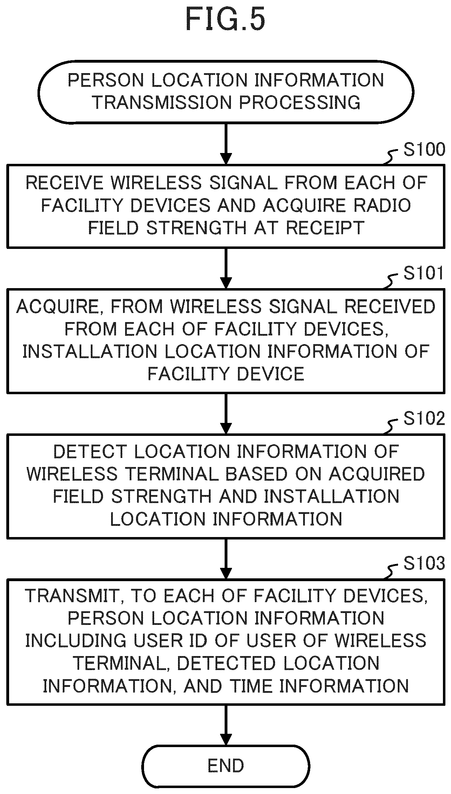

FIG. 5 is a flowchart illustrating a sequence of person location information transmission processing executed by the wireless terminal 2. Upon startup of the location management application by an operation by the user, the wireless terminal 2 executes the person location information transmission processing repeatedly and periodically, for example, at one-minute intervals.

### Step S100

The wireless terminal 2 receives the wireless signal transmitted from each of the facility devices 3 and measures and acquires a radio field strength at receipt of the wireless signal. Thereafter, the processing by the wireless terminal 2 proceeds to step S101.

### Step S101

The wireless terminal 2 extracts and acquires, from the wireless signal received from each of the facility devices 3, the installation location information of the facility device 3. Thereafter, the processing by the wireless terminal 2 proceeds to step S102.

### Step S102

The wireless terminal 2 detects, based on the radio field strengths and the installation location information acquired from the three or more facility devices 3, location information indicating a local location, that is, a location of the wireless terminal 2. Thereafter, the processing by the wireless terminal 2 proceeds to step S103.

### Step S103

The wireless terminal 2 transmits to each of the facility devices 3 the person location information including (i) the user ID of the user of the local terminal, that is, the user ID read out from the information storage 240, (ii) the detected location information, and (iii) the time information, and ends the person location information transmission processing in the current cycle. Upon receiving the person location information transmitted from the wireless terminal 2, each of the facility devices 3 stores the received person location information in the information storage 320.

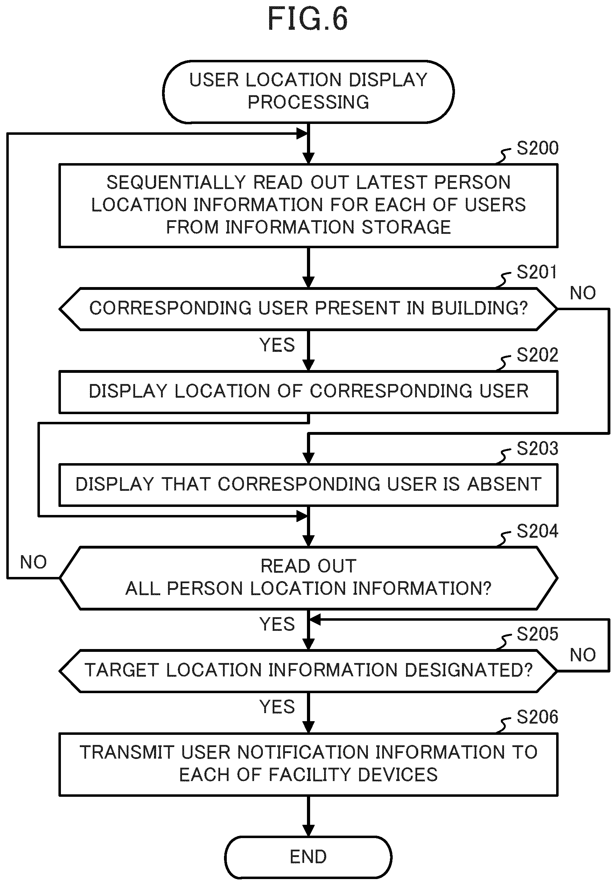

FIG. 6 is a flowchart illustrating a sequence of user location display processing executed by the wireless terminal 2. The wireless terminal 2 executes the user location display processing upon an operation by the user to request display of a location of each of the users.

### Step S200

The wireless terminal 2 sequentially reads out the latest person location information for each of the users stored in the information storage 240. Thereafter, the processing by the wireless terminal 2 proceeds to step S201.

### Step S201

The wireless terminal 2 determines, based on the latest person location information that is read out, whether the corresponding user is present in the building B. When the corresponding user is present in the building B (YES in step S201), the processing by the wireless terminal 2 proceeds to step S202. Conversely, when the corresponding user is absent from the building B (NO in step S201), the processing by the wireless terminal 2 proceeds to step S203.

### Step S202

The wireless terminal 2 displays, on the display 22 in a predetermined manner, a location of the corresponding user. Thereafter, the processing by the wireless terminal 2 proceeds to step S204.

### Step S203

The wireless terminal 2 displays on the display 22 that the corresponding user is absent. Thereafter, the processing by the wireless terminal 2 proceeds to step S204.

### Step S204

The wireless terminal 2 determines whether all of the latest person location information for each of the users stored in the information storage 240 is read out. When all of the person location information is read out (YES in step S204), the processing by the wireless terminal 2 proceeds to step S205. Conversely, when readout of all of the person location information is not yet completed (NO in step S204), the processing by the wireless terminal 2 returns to step S200.

### Step S205

The wireless terminal 2 determines whether the target location information is designated by the user. When the target location information is designated by the user (YES in step S205), that is, when designation of a desired user among the users who are present in the building B other than the user and designation of the target location information are received from the user, the processing by the wireless terminal 2 proceeds to step S206. Conversely, when the designation of the target location information by the user is not made (NO in step S205), the wireless terminal 2 continuously executes the processing in step S205.

### Step S206

The wireless terminal 2 transmits, to each of the facility devices 3, the user notification information that includes (i) the user ID of the designated user, (ii) the target location information, (iii) the user ID of the user having made the designation, and (iv) the time information. Thereafter, the wireless terminal 2 ends the user location display processing.

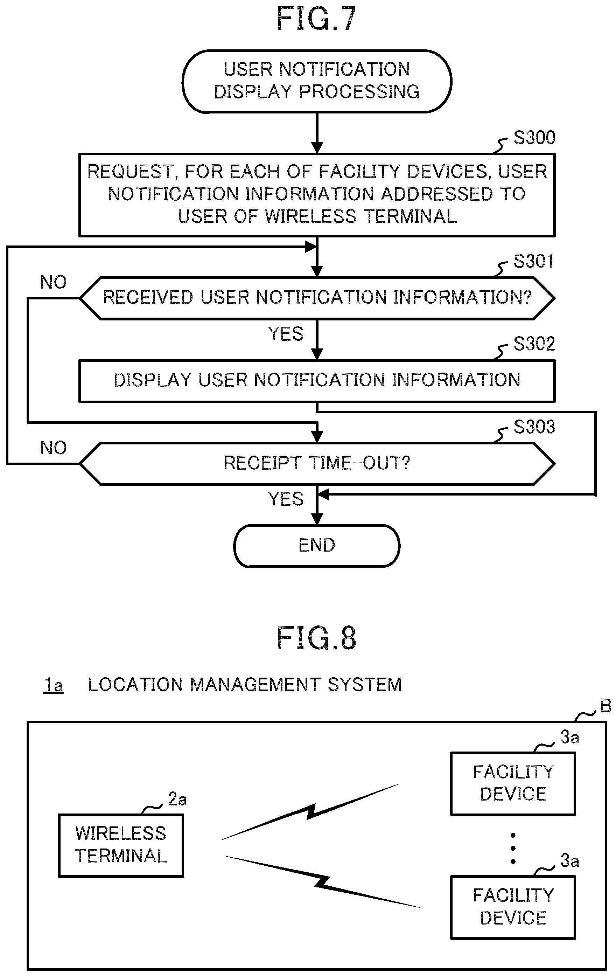

FIG. 7 is a flowchart illustrating a sequence of user notification display processing executed by the wireless terminal 2. Upon startup of the location management application by an operation by the user, the wireless terminal 2 executes the user notification display processing repeatedly and periodically, for example, at one-minute intervals.

### Step S300

The wireless terminal 2 transmits, to each of the facility devices 3, the user notification information request notification for requesting the user notification information addressed to the user of the wireless terminal 2. Thereafter, the processing by the wireless terminal 2 proceeds to step S301.

### Step S301

The wireless terminal 2 determines whether the user notification information is received from any of the facility devices 3. When the user notification information is received from any of the facility devices 3 (YES in step S301), the processing by the wireless terminal 2 proceeds to step S302. Conversely, when the user notification information is not received from the facility devices 3 (NO in step S301), the processing by the wireless terminal 2 proceeds to step S303.

### Step S302

The wireless terminal 2 displays the received user notification information on the display 22 in a predetermined manner and ends the user notification display processing in the current cycle.

### Step S303

The wireless terminal 2 determines whether receipt time-out occurs, that is, whether a predetermined receipt time-out period is elapsed after transmission of the user notification information request notification. When receipt time-out does not occur (NO in step S303), the processing by the wireless terminal 2 returns to step S301. Conversely, when receipt time-out occurs (YES in step S303), the wireless terminal 2 ends the user notification display processing in the current cycle.

As described above, in the location management system 1 according to the present embodiment, the wireless terminal 2 carried by each of the users detects the location information of the user through wireless communication with each of the facility devices 3 that are each an indoor unit, an illumination device, or the like that is installed in the building B, and transmits to each of the facility devices 3 the person location information including the user ID of the user and the detected location information. Each of the facility devices 3 stores, in the information storage 320, the person location information transmitted from the wireless terminal 2. Due to this configuration, the information storage 320 of each of the facility devices 3 stores the person location information of each of the users. As described above, since detection of a location of a person and management of information of the location are performed using facility devices that are generally installed in a building such as an office building, low-cost management of a location of a person in the building B can be achieved.

Furthermore, the wireless terminal 2 acquires the person location information of each of the users from the facility devices 3 and determines for each of the users whether the user is present in the building B based on the acquired person location information of the user. Additionally, the wireless terminal 2 displays, for the user present in the building B, the location of this user on the display 22 in a manner in which this user is identifiable, and displays, for the user absent from the building B, on the display 22 that this user is absent. This configuration enables easily grasping whereabouts of each of the users in the building B, enabling easy grasping of, for example, whereabouts of each worker in a free address office, attendance of workers in an office in the case of employment of both teleworking and in-office working, or the like.

Furthermore, the wireless terminal 2 receives, from the user, designation of a desired user among the users who are present in the building B other than the user and designation of the target location information, and transmits, to the facility devices 3, the user notification information that includes (i) the user ID of the designated user and (ii) the designated target location information. The facility devices 3 stores, in the information storage 320, the user notification information transmitted from the wireless terminal 2. Additionally, the wireless terminal 2 acquires from the facility devices 3 the user notification information addressed to the user of the wireless terminal 2 and displays the acquired user notification information on the display 22 in a predetermined manner. This configuration allows the user to easily send, to a desired user, notification for gathering at a desired place.

### Modified Example 1

The wireless terminal 2 may store in advance, in the information storage 240, information associating a device ID of each of the facility devices 3 with the installation location information of the facility device 3. In this case, the information storage 320 of each of the facility devices 3 stores the device ID instead of the installation location information and each of the facility devices 3 periodically transmits a wireless signal including the device ID.

### Modified Example 2

Each of the facility devices 3 may periodically perform broadcast transmission of the person location information for each user ID that is stored in the information storage 320. In this case, the person location information acquirer 203 of the wireless terminal 2 need not transmit the person location information request notification to each of the facility devices 3.

### Modified Example 3

The user notification information transmitter 304 of each of the facility devices 3 may transmit, when the user notification information request notification is received from the wireless terminal 2, to this wireless terminal 2, all of the user notification information stored in the information storage 320. In this case, the user notification information transmitter 304 does not delete the user notification information from the information storage 320. In the case of this configuration, the user notification information acquirer 208 of this wireless terminal 2 checks the notification target user IDs included in the user notification information received from the facility devices 3 against the user ID of the user of the wireless terminal 2, and in the case of matching of these IDs, supplies this user notification information to the information display unit 205. In this modified example, the user notification information stored in the information storage 320 of each of the facility devices 3 is taken to be deleted after elapse of a predetermined time period from a time of storage.

### Modified Example 4

Each of the facility devices 3 may periodically transmit, by broadcast transmission, all of the user notification information stored in the information storage 320. In this case, each of the facility devices 3 does not delete the user notification information from the information storage 320. In the case of this configuration, the user notification information acquirer 208 of the wireless terminal 2 need not transmit the user notification information request information to each of the facility devices 3, checks the notification target user IDs included in the user notification information received from the facility devices 3 against the user ID of the user of the wireless terminal 2, and in the case of matching of these IDs, supplies this user notification information to the information display unit 205. In this modified example, the user notification information stored in the information storage 320 of each of the facility devices 3 is taken to be deleted after elapse of a predetermined time period from a timing of storage.

### Modified Example 5

Configuration for management of a location of an article installed in the building B, such as a sensor, office furniture or a fixture, may be used. In the case of this configuration, this article includes a communication device for wireless communication with the facility devices 3. This communication device detects location information of the article through wireless communication with each of the facility devices 3 and transmits, to each of the facility devices 3, article location information including identification information of the article and the detected location information. Each of the facility devices 3 stores in the information storage 320 the article location information transmitted from the communication device. The communication device may be removably attached to the article.

### Modified Example 6

Functional elements of the wireless terminal 2 as illustrated in FIG. 4 may be achieved wholly or partially by dedicated hardware. Additionally, functional elements of the facility device 3 as illustrated in FIG. 4 may be achieved wholly or partially by dedicated hardware. The dedicated hardware is, for example, a single circuit, a composite circuit, a programmed processor, an application specific integrated circuit (ASIC), a field-programmable gate array (FPGA), or a combination thereof.

The technical concepts according to the above modified examples may be achieved separately of one another or may be achieved in an appropriate combination.

### Embodiment 2

Next, Embodiment 2 of the present disclosure is described. In the explanation below, structural elements or the like that are common with Embodiment 1 are assigned the same reference sign, and explanation for such elements is omitted.

FIG. 8 illustrates overall configuration of a location management system 1a according to Embodiment 2. The location management system 1a is an example of the location management system according to the present disclosure and is a system for managing locations within a building B of users using the building B. The building B is an office building, a factory, a lodging facility, a commercial facility, a public facility, or the like. As illustrated in FIG. 8, the location management system 1a includes a wireless terminal 2a carried by each of the users and at least three facility devices 3a.

### Wireless Terminal 2a

The wireless terminal 2a is an example of the wireless terminal according to the present disclosure. The wireless terminal 2a is a portable electronic device, such as a smartphone and tablet terminal, that is carried by each of the users who use the building B. Hardware configuration of the wireless terminal 2a is similar to that of the wireless terminal 2 in Embodiment 1 (see FIG. 2).

### Facility Device 3a

The facility device 3a is an example of the facility device according to the present disclosure. The facility device 3a is, for example, an indoor unit of an air conditioner, an illumination device, or the like, and three or more of the facility devices 3a are installed in the building B. Hardware configuration of the facility device 3a is similar to that of the facility device 3 in Embodiment 1 (see FIG. 3).

### Functional Configuration of the Wireless Terminal 2a and the Facility Device 3a

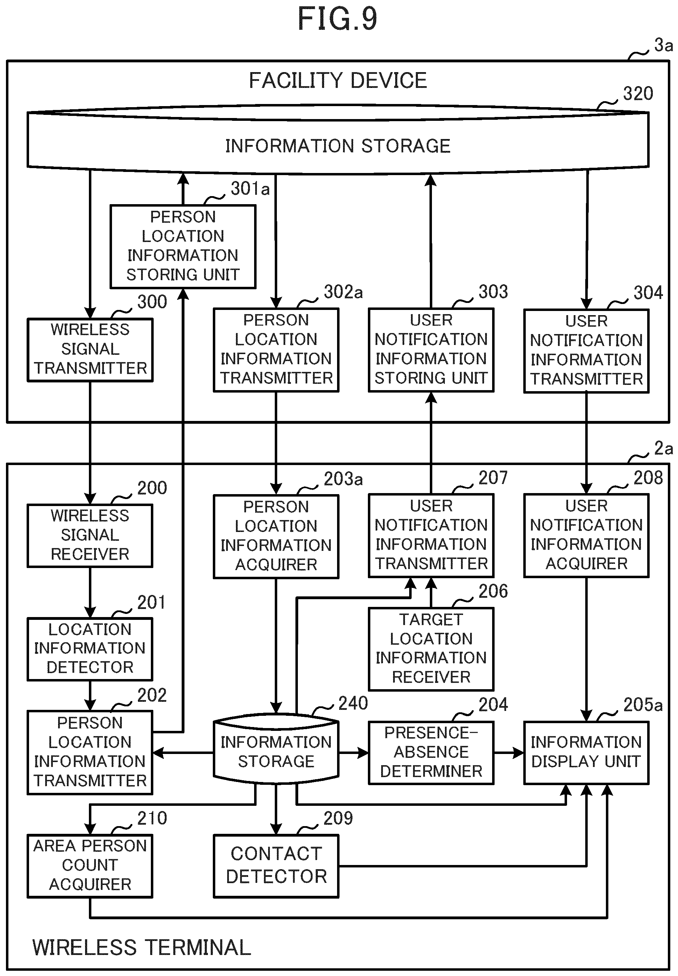

FIG. 9 is a block diagram illustrating functional configuration of the wireless terminal 2a and the facility device 3a. As illustrated in FIG. 9, the wireless terminal 2a includes a wireless signal receiver 200, a location information detector 201, a person location information transmitter 202, a person location information acquirer 203a, a presence-absence determiner 204, an information display unit 205a, a target location information receiver 206, a user notification information transmitter 207, a user notification information acquirer 208, a contact detector 209 and an area person count acquirer 210. These functional elements are achieved by execution, by a control circuit 20 included in the wireless terminal 2a, of a location management application that is stored in an auxiliary storage device 24 and that is an application program for utilizing a location management service provided by the location management system 1a.

The facility device 3a includes a wireless signal transmitter 300, a person location information storing unit 301a, a person location information transmitter 302a, a user notification information storing unit 303 and a user notification information transmitter 304. These functional elements are achieved by execution, by a control circuit 30 included in the facility device 3a, of an information transfer program that is stored in an auxiliary storage device 32 and that is a program for performing transfer of information to and from the wireless terminal 2a.

Although the person location information storing unit 301a of the facility device 3a receives via a communication interface 31 the person location information transmitted from the wireless terminal 2a and stores the received person location information in the information storage 320 similarly to the person location information storing unit 301 in Embodiment 1, the person location information storing unit 301a does not perform overwrite saving to the information storage 320 with the latest person location information for each user ID, and stores the received person location information in the information storage 320 in a time series. That is, the information storage 320 stores a history of the person location information for each user ID.

The person location information acquirer 203a of the wireless terminal 2a acquires from each of the facility devices 3a the history of the person location information of each of the users periodically, for example, at one-minute intervals. Specifically, the person location information acquirer 203a sends notification for requesting the person location information that is hereinafter referred to as the "person location information request notification" via a communication interface 21 by unicast transmission to each of the facility devices 3a or by broadcast transmission. The person location information transmitter 302a of each of the facility devices 3a transmits, upon receiving the above person location information request notification via the communication interface 31, to the wireless terminal 2a as a transmission source of this person location information request notification, the history of the person location information for each user ID that is stored in the information storage 320.

The person location information acquirer 203a receives and acquires via the communication interface 21 the history of the person location information for each user ID that is transmitted from each of the facility devices 3a, and the person location information acquirer 203a stores in an information storage 240 the acquired history of the person location information for each user ID such that duplicate storage in the information storage 240 of the person location information that is identical in content, in other words, the person location information that is identical in the user ID, the location information and the time information, does not occur.

The contact detector 209 is an example of contact detection means according to the present disclosure. The contact detector 209 detects contact between the users in the building B. Specifically, upon the user performing an operation for requesting display of unspecific contact information with no user being specified, the contact detector 209 determines whether contact between the users occurs based on the history of the person location information for each user ID that is stored in the information storage 240, and supplies, to the information display unit 205a, the unspecific contact information including information based on a result of the determination. When a distance between users is shorter than a predetermined threshold, the contact detector 209 determines that contact between these users occurs.

Upon determining that contact between the users occurs, the contact detector 209 supplies to the information display unit 205a the unspecific contact information that includes time information indicating a time of the contact, the user IDs of these users, and a name of a place at which the contact occurs. Conversely, upon determining that contact between the users does not occur, the contact detector 209 supplies to the information display unit 205a the unspecific contact information including information to that effect.

Further, upon the user performing an operation for requesting display of specific contact information with specification of a user, the contact detector 209 determines whether contact between the specified user that is hereinafter referred to as the "specific user" and a user other than the specific user occurs based on the history of the person location information for each user ID that is stored in the information storage 240, and supplies, to the information display unit 205a, the specific contact information including information based on a result of the determination. Specifically, upon determining that contact between the specific user and a user other than the specific user occurs, the contact detector 209 supplies to the information display unit 205a the specific contact information that includes time information indicating a time of the contact, the user ID of the other user, and a name of a place at which the contact occurs. Conversely, upon determining that contact between the specific user and a user other than the specific user does not occur, the contact detector 209 supplies to the information display unit 205a the specific contact information including information to that effect.

The information display unit 205a is an example of the information display means according to the present disclosure. Similarly to the information display unit 205 in Embodiment 1, the information display unit 205a displays, based on a result of a determination by the presence-absence determiner 204, on the display 22 in a predetermined manner, a location of the user present in the building B, and displays, on the display 22 in a predetermined manner, the user notification information acquired by the user notification information acquirer 208. Additionally, the information display unit 205a displays, on the display 22 in a predetermined manner, information based on a result of the detection by the contact detector 209, that is, the unspecific contact information or the specific contact information that is supplied from the contact detector 209.

The area person count acquirer 210 is an example of area person count acquisition means according to the present disclosure. The area person count acquirer 210 acquires a person count for a designated area in the building B, such as a designated place, a floor or the whole building B, at a designated time or in a designated time slot. Specifically, upon the user performing an operation for requesting display of an area person count with designation of a time and an area, the area person count acquirer 210 acquires a person count for the designated area at the designated time based on the history of the person location information for each user ID that is stored in the information storage 240, and supplies, to the information display unit 205a, information including (i) time information indicating this time, (ii) information indicating this area and (iii) information indicating the acquired person count.

Additionally, upon the user performing an operation for requesting display of an area person count with designation of a time slot and an area, the area person count acquirer 210 acquires a maximum value, a minimum value and an average value of the person count for the designated area in the designated time slot based on the history of the person location information for each user ID that is stored in the information storage 240, and supplies, to the information display unit 205a, information including (i) time slot information indicating this time slot, (ii) information indicating this area and (iii) information indicating the acquired values of the person count. The information display unit 205a displays, on the display 22, in a predetermined manner, information based on a result of the acquisition by the area person count acquirer 210, that is, the information supplied from the area person count acquirer 210.

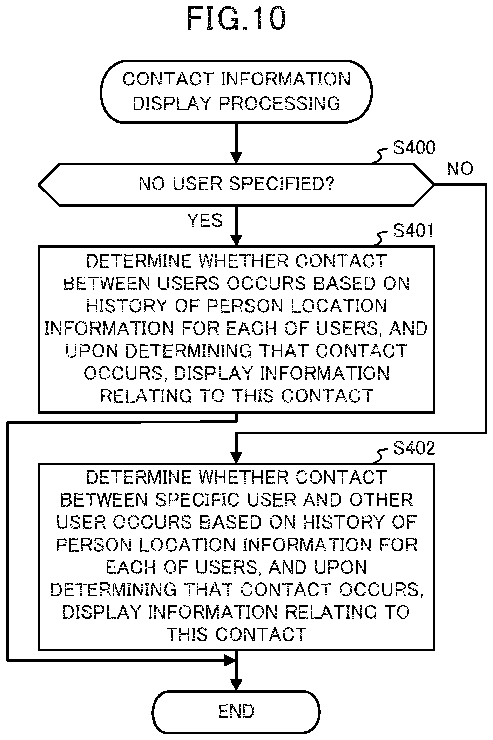

FIG. 10 is a flowchart illustrating a sequence of contact information display processing executed by the wireless terminal 2a. The wireless terminal 2a executes the contact information display processing upon the user performing the operation to request display of the unspecific contact information or the operation to request display of the specific contact information.

### Step S400

The wireless terminal 2a determines whether a user as a target is unspecific. When the user as the target is unspecific, that is, when no user is specified as the target (YES in step S400), the processing by the wireless terminal 2a proceeds to step S401. Conversely, when the user as the target is specified (NO in step S400), the processing by the wireless terminal 2a proceeds to step S402.

### Step S401

The wireless terminal 2a determines whether contact between the users occurs based on the history of the person location information for each of the users that is stored in the information storage 240, and upon determining that contact between the users occurs, displays information relating to this contact on the display 22. For example, the wireless terminal 2a performs association between a time of occurrence of the contact, user names of the users undergone the contact and a name of a place at which the contact occurs, and displays to such effect on the display 22. Thereafter, the wireless terminal 2a ends the contact information display processing.

### Step S402

The wireless terminal 2a determines whether contact between the specific user and a user other than the specific user occurs based on the history of the person location information for each of the users that is stored in the information storage 240, and upon determining that contact between the specific user and a user other than the specific user occurs, displays information relating to this contact on the display 22. For example, the wireless terminal 2a performs association between a time of occurrence of the contact, a user name of the other user undergone the contact with the specific user and a name of a place at which the contact occurs, and displays to such effect on the display 22. Thereafter, the wireless terminal 2a ends the contact information display processing.

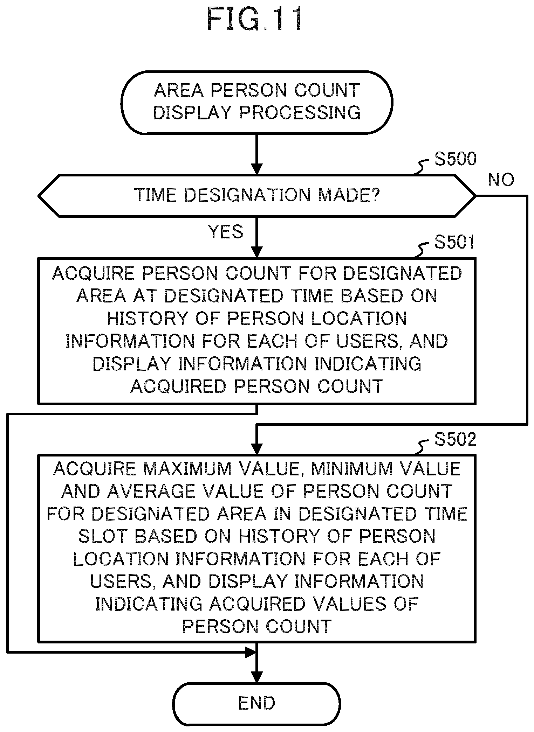

FIG. 11 is a flowchart illustrating a sequence of area person count display processing executed by the wireless terminal 2a. Upon the user performing the operation for requesting display of the area person count, the wireless terminal 2a executes the area person count display processing.

### Step S500

The wireless terminal 2a determines whether time designation is made, that is, whether a time is designated by the user. When the time designation is made (YES in step S500), the processing by the wireless terminal 2a proceeds to step S501. Conversely, when the time designation is not made (NO in step S500), that is, when time slot designation is made, the processing by the wireless terminal 2a proceeds to step S502.

### Step S501

The wireless terminal 2a acquires a person count for the designated area at the designated time based on the history of the person location information for each of the users that is stored in the information storage 240, and displays information indicating the acquired person count on the display 22. Thereafter, the wireless terminal 2a ends the area person count display processing.

### Step S502

The wireless terminal 2a acquires a maximum value, a minimum value and an average value of the person count for the designated area in the designated time slot based on the history of the person location information for each of the users that is stored in the information storage 240, and displays information indicating the acquired values of the person count on the display 22. Thereafter, the wireless terminal 2a ends the area person count display processing.

As described above, in the location management system 1a according to the present embodiment, the wireless terminal 2a carried by each of the users detects the location information of the user through wireless communication with each of the facility devices 3a that are each an indoor unit, an illumination device, or the like that is installed in the building B, and transmits to each of the facility devices 3a the person location information including the user ID of the user and the detected location information. Each of the facility devices 3a stores, in the information storage 320, the person location information transmitted from the wireless terminal 2a. Due to this configuration, the information storage 320 of each of the facility devices 3a stores the person location information of each of the users. As described above, since detection of a location of a person and management of information of the location are performed using facility devices that are generally installed in a building such as an office building, low-cost management of the location of a person in the building B can be achieved.

Furthermore, the wireless terminal 2a acquires the person location information of each of the users from the facility devices 3a and determines for each of the users whether the user is present in the building B based on the acquired person location information of the user. Additionally, the wireless terminal 2a displays, for the user present in the building B, the location of this user on the display 22 in a manner in which this user is identifiable, and displays, for the user absent from the building B, on the display 22 that this user is absent. This configuration enables easily grasping whereabouts of each of the users in the building B, enabling easy grasping of, for example, whereabouts of each worker in a free address office, attendance of workers in an office in the case of employment of both teleworking and in-office working, or the like.

Furthermore, the wireless terminal 2a receives, from the user, designation of a desired user among the users who are present in the building B other than the user and designation of the target location information, and transmits, to the facility devices 3a, the user notification information that includes (i) the user ID of the designated user and (ii) the designated target location information. The facility devices 3a stores, in the information storage 320, the user notification information transmitted from the wireless terminal 2a. Additionally, the wireless terminal 2a acquires from the facility devices 3a the user notification information addressed to the user of the wireless terminal 2a and displays the acquired user notification information on the display 22 in a predetermined manner. This configuration allows the user to easily send, to a desired user, notification for gathering at a desired place.

Furthermore, the wireless terminal 2a detects contact between the users in the building B based on the history of the person location information for each of the users and displays, on the display 22 in a predetermined manner, information based on a result of the detection. This configuration enables easily grasping a state of contact between the users using the building B.

Furthermore, the wireless terminal 2a acquires a person count for a designated area in the building B at a designated time or in a designated time slot based on the history of the person location information for each of the users and displays, on the display 22 in a predetermined manner, information based on a result of the acquisition. This configuration enables easily grasping a state of a user count for a desired area in the building B.

### Modified Example 1

The wireless terminal 2a may store in advance, in the information storage 240, information associating a device ID of each of the facility devices 3a with the installation location information of the facility device 3a. In this case, the information storage 320 of each of the facility devices 3a stores the device ID instead of the installation location information and each of the facility devices 3a periodically transmits a wireless signal including the device ID.

### Modified Example 2

Each of the facility devices 3a may periodically perform broadcast transmission of the history of the person location information for each user ID that is stored in the information storage 320. In this case, the person location information acquirer 203a of the wireless terminal 2a need not transmit the person location information request notification to each of the facility devices 3a.

### Modified Example 3

The user notification information transmitter 304 of each of the facility devices 3a may transmit, when the user notification information request notification from the wireless terminal 2a is received, to this wireless terminal 2a, all of the user notification information stored in the information storage 320. In this case, the user notification information transmitter 304 does not delete the user notification information from the information storage 320. In the case of this configuration, the user notification information acquirer 208 of this wireless terminal 2a checks the notification target user IDs included in the user notification information received from the facility devices 3a against the user ID of the user of the wireless terminal 2a, and in the case of matching of these IDs, supplies this user notification information to the information display unit 205a. In this modified example, the user notification information stored in the information storage 320 of each of the facility devices 3a is taken to be deleted after elapse of a predetermined time period from a timing of storage.

### Modified Example 4

Each of the facility devices 3a may periodically transmit, by broadcast transmission, all of the user notification information stored in the information storage 320. In this case, each of the facility devices 3a does not delete the user notification information from the information storage 320. In the case of this configuration, the user notification information acquirer 208 of the wireless terminal 2a need not transmit the user notification information request information to each of the facility devices 3a, checks the notification target user IDs included in the user notification information received from the facility devices 3a against the user ID of the user of the wireless terminal 2a, and in the case of matching of these IDs, supplies this user notification information to the information display unit 205a. In this modified example, the user notification information stored in the information storage 320 of each of the facility devices 3a is taken to be deleted after elapse of a predetermined time period from a timing of storage.

### Modified Example 5

Configuration for management of a location of an article installed in the building B, such as a sensor, office furniture or a fixture, may be used. In the case of this configuration, this article includes a communication device for wireless communication with the facility devices 3a. This communication device detects location information of the article through wireless communication with each of the facility devices 3a and transmits, to each of the facility devices 3a, article location information including identification information of the article and the detected location information. Each of the facility devices 3a stores in the information storage 320 the article location information transmitted from the communication device. The communication device may be removably attached to the article.

### Modified Example 6

Instead of periodically acquiring from each of the facility devices 3a the history of the person location information for each user ID, the person location information acquirer 203a of the wireless terminal 2a may (i) periodically acquire, from each of the facility devices 3a, the latest person location information for each user ID and (ii) upon the user performing the operation requesting display of the contact information or the operation requesting display of the area person count, acquire from each of the facility devices 3a the history of the person location information for each user ID.

### Modified Example 7

Instead of periodically acquiring from each of the facility devices 3a the history of the person location information for each user ID, the person location information acquirer 203a of the wireless terminal 2a may (i) periodically acquire, from each of the facility devices 3a, the latest person location information for each user ID and (ii) store the acquired person location information in the information storage 240 in a time series.

### Modified Example 8

Functional elements of the wireless terminal 2a as illustrated in FIG. 9 may be achieved wholly or partially by dedicated hardware. Additionally, functional elements of the facility device 3a as illustrated in FIG. 9 may be achieved wholly or partially by dedicated hardware. The dedicated hardware is, for example, a single circuit, a composite circuit, a programmed processor, an ASIC, an FPGA, or a combination thereof.

The technical concepts according to the above modified examples may be achieved separately of one another or may be achieved in an appropriate combination.

### Embodiment 3

Next, Embodiment 3 of the present disclosure is described. In the explanation below, structural elements or the like that are common with Embodiment 1 or Embodiment 2 are assigned the same reference sign, and explanation for such elements is omitted.

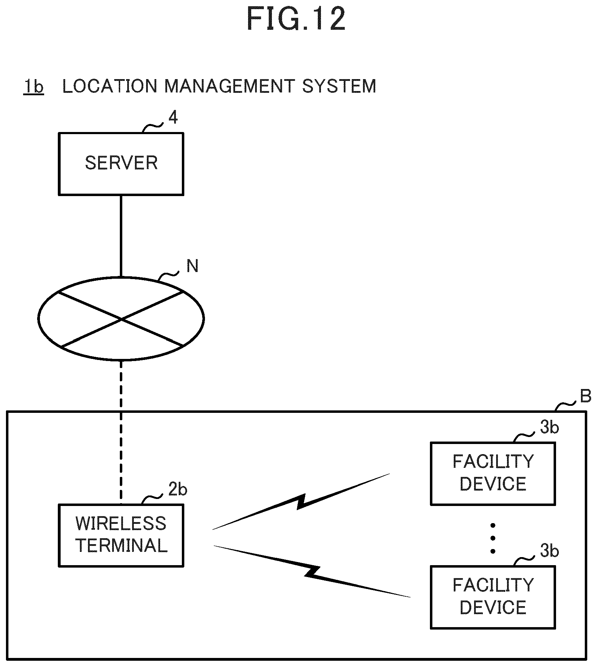

FIG. 12 illustrates overall configuration of a location management system 1b according to Embodiment 3. The location management system 1b is an example of the location management system according to the present disclosure and is a system for managing locations within a building B of users using the building B. The building B is an office building, a factory, a lodging facility, a commercial facility, a public facility, or the like. As illustrated in FIG. 12, the location management system 1b includes a wireless terminal 2b carried by each of the users, at least three facility devices 3b and a server 4.

### Wireless Terminal 2b

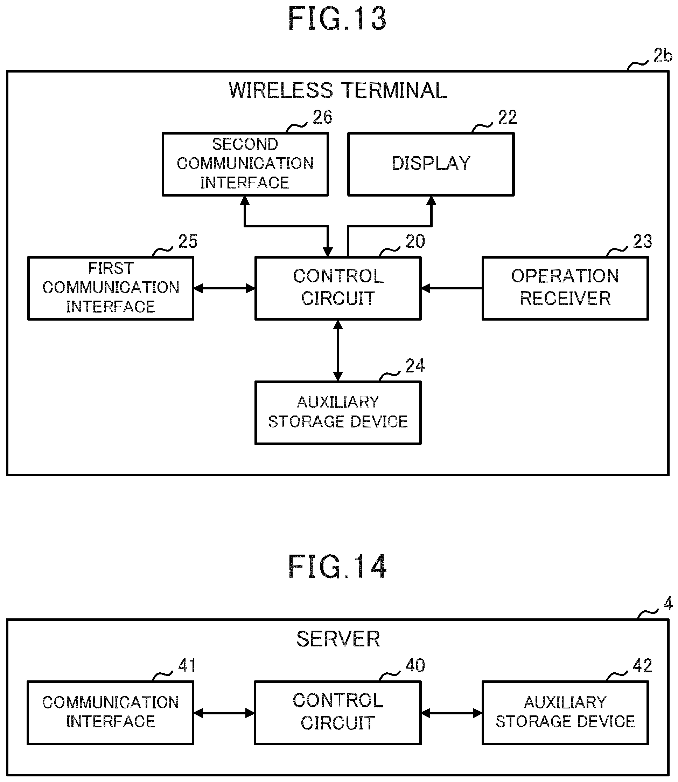

The wireless terminal 2b is an example of the wireless terminal according to the present disclosure. The wireless terminal 2b is a portable electronic device, such as a smartphone and tablet terminal, that is carried by each of the users who use the building B. As illustrated in FIG. 13, the wireless terminal 2b includes, as hardware components, a control circuit 20, a first communication interface 25, a second communication interface 26, a display 22, an operation receiver 23, and an auxiliary storage device 24. That is, hardware configuration of the wireless terminal 2b differs from the hardware configuration of the wireless terminal 2 in Embodiment 1 (see FIG. 2) in that the first communication interface 25 and the second communication interface 26 are included instead of the communication interface 21, while other points are similar.

The first communication interface 25 is an example of first communication means according to the present disclosure. Similarly to the communication interface 21, the first communication interface 25 is an interface for wireless communication with the facility devices 3b by communication in an ad hoc manner and is an interface for performing, for example, BLE communication.

The second communication interface 26 is an example of second communication means according to the present disclosure. The second communication interface 26 is an interface for communication with the server 4 via a network N that is a wide area network such as the Internet. Examples of the second communication interface 26 include an interface for performing wireless local area network (LAN) communication and an interface for performing long term evolution (LTE) communication.

### Facility Device 3b

The facility device 3b is an example of the facility device according to the present disclosure. The facility device 3b is, for example, an indoor unit of an air conditioner, an illumination device, or the like, and three or more of the facility devices 3b are installed in the building B. Hardware configuration of the facility device 3b is similar to that of the facility device 3 in Embodiment 1 (see FIG. 3).

### Server 4

The server 4 is an example of a management device according to the present disclosure. The server 4 is a so-called cloud server installed by a manufacturer, a vendor, or the like of the facility devices 3b and is connected to the network N. As illustrated in FIG. 14, the server 4 includes, as hardware components, a control circuit 40, a communication interface 41 and an auxiliary storage device 42.

The control circuit 40 performs overall control of the server 4. The control circuit 40 includes, although not illustrated, a CPU, a ROM and a RAM. Functions of the server 4 that are achieved by the control circuit 40 are described later in detail.

The communication interface 41 is an example communication means included in the management device according to the present disclosure. The communication interface 41 is an interface that is connectable to the network N to communicate with other devices such as the wireless terminal 2b and is, for example, an Ethernet^{®}-based interface.

The auxiliary storage device 42 is a high-capacity storage device that includes readable/rewritable nonvolatile semiconductor memory, an HDD, or the like. Examples of the readable/rewritable nonvolatile semiconductor memory include an EEPROM and a flash memory. The auxiliary storage device 42 stores (i) an information transfer program that is a program for performing transfer of information to and from the wireless terminal 2b and (ii) data for use in execution of the information transfer program.

The information transfer program and an update program for updating the information transfer program is acquirable by the server 4, through communication, from other device. These programs can be distributed by storage in a computer-readable recording medium, such as a CD-ROM, a DVD, a magneto-optical disc, a USB memory, an HDD, an SSD, and a memory card. The server 4 may read out and acquire, upon direct or indirect attachment thereto of such recording medium, the information transfer program and the update program from this recording medium.

### Functional Configuration of the Wireless Terminal 2b, the Facility Device 3b and the Server 4

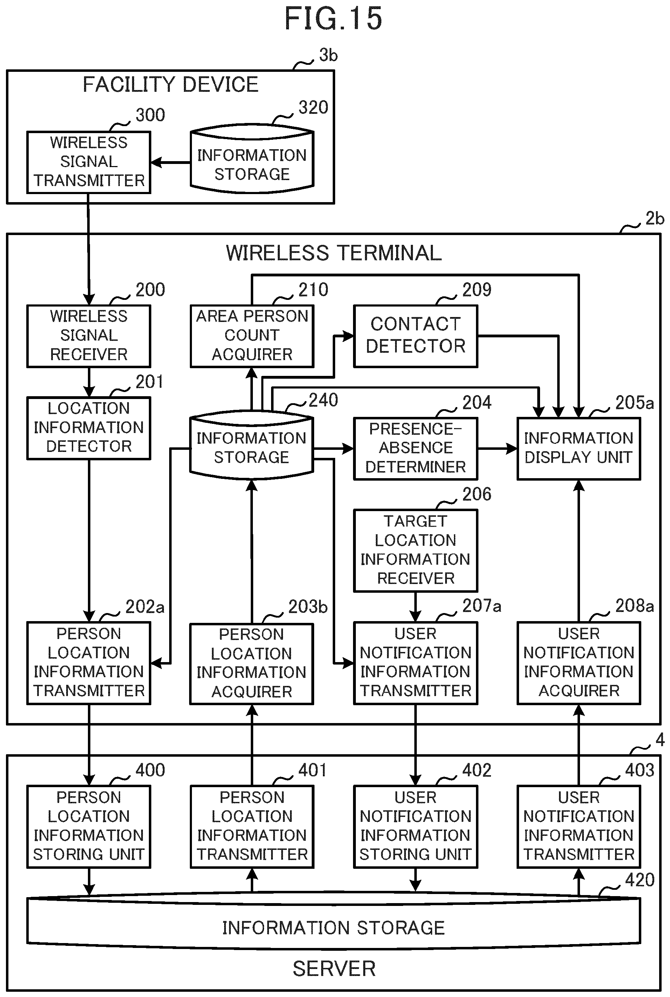

FIG. 15 is a block diagram illustrating functional configuration of the wireless terminal 2b, the facility device 3b and the server 4. As illustrated in FIG. 15, the wireless terminal 2b includes a wireless signal receiver 200, a location information detector 201, a person location information transmitter 202a, a person location information acquirer 203b, a presence-absence determiner 204, an information display unit 205a, a target location information receiver 206, a user notification information transmitter 207a, a user notification information acquirer 208a, a contact detector 209 and an area person count acquirer 210. These functional elements are achieved by execution, by the control circuit 20 included in the wireless terminal 2b, of a location management application that is stored in the auxiliary storage device 24 and that is an application program for utilizing a location management service provided by the location management system 1b.

The facility device 3b includes a wireless signal transmitter 300. The wireless signal transmitter 300 is achieved by execution, by a control circuit 30 included in the facility device 3b, of a wireless signal transmission program that is stored in the auxiliary storage device 32 and that is a program for periodically transmitting a wireless signal including installation location information indicating an installation location of the facility device 3b.

The server 4 includes a person location information storing unit 400, a person location information transmitter 401, a user notification information storing unit 402 and a user notification information transmitter 403. These functional elements are achieved by execution, by the control circuit 40, the aforementioned information transfer program stored in the auxiliary storage device 42.

The person location information transmitter 202a of the wireless terminal 2b is an example of the person location information transmission means according to the present disclosure. Upon the location information detector 201 detecting the location information of the wireless terminal 2b, the person location information transmitter 202a reads out, from an information storage 240, a user ID of the user of the wireless terminal 2b, and transmits to the server 4, via the second communication interface 26, person location information including the read-out user ID, the detected location information, and time information indicating a current time.

The person location information storing unit 400 of the server 4 receives via the communication interface 41 the person location information transmitted from the wireless terminal 2b and stores the received person location information in the information storage 420 in a time series for each user ID. That is, the information storage 420 stores a history of the person location information for each user ID. The information storage 420 is an example of storage means included in the management device according to the present disclosure and is a memory region provided by the auxiliary storage device 42.

The person location information acquirer 203b of the wireless terminal 2b acquires from the server 4 the history of the person location information of each of the users periodically, for example, at one-minute intervals. Specifically, the person location information acquirer 203b sends notification for requesting the person location information that is hereinafter referred to as the "person location information request notification" via the second communication interface 26 to the server 4. The person location information transmitter 401 of the server 4 transmits, upon receiving the above person location information request notification via the communication interface 41, via the communication interface 41 to the wireless terminal 2b as a transmission source of this person location information request notification, the history of the person location information for each user ID that is stored in the information storage 420.

The person location information acquirer 203b receives and acquires via the second communication interface 26 the history of the person location information for each user ID that is transmitted from the server 4, and stores in the information storage 240 the acquired history of the person location information for each user ID.

Upon the target location information receiver 206 receiving from a user the designation of the desired user and the designation of the target location information, the user notification information transmitter 207a of the wireless terminal 2b transmits, via the second communication interface 26 to the server 4, user notification information that includes (i) the user ID of the designated user that is hereinafter referred to as the "notification target user ID", (ii) the target location information, (iii) the user ID of the user of the wireless terminal 2b, in other words, the user having performed the designation, that is hereinafter referred to as the "notification source user ID", and (iv) the time information. In the case in which multiple users are designated, the user notification information transmitter 207a may include, in one set of the user notification information, the user ID of each designated user as the notification target user ID, or may transmit, to server 4, multiple sets of the user notification information that each correspond to a corresponding single user of the designated users.

The user notification information storing unit 402 of the server 4 receives via the communication interface 41 the user notification information transmitted from the wireless terminal 2b and stores the received user notification information in the information storage 420.

The user notification information acquirer 208a of the wireless terminal 2b acquires from the server 4 the user notification information addressed to the user of the wireless terminal 2b periodically, for example, at one-minute intervals. Specifically, the user notification information acquirer 208a periodically sends notification for requesting the user notification information that is hereinafter referred to as the "user notification information request notification" via the second communication interface 26 to the server 4. The user notification information request notification includes the user ID of the user of the wireless terminal 2b. The user notification information transmitter 403 of the server 4 retrieves, upon receiving the user notification information request notification from the wireless terminal 2b via the communication interface 41, from all of the user notification information stored in the information storage 420 and corresponding to the building B, the user notification information including the notification target user ID that is identical to the user ID included in this user notification information request notification.

In the case in which such user notification information as above exists, the user notification information transmitter 403 transmits this user notification information via the communication interface 41 to the wireless terminal 2b that is the transmission source of the user notification information request notification. In this case, the user notification information transmitter 403 deletes the user notification information from the information storage 420. Conversely, in the case in which such user notification information as above does not exist, the user notification information transmitter 403 makes no reply to the wireless terminal 2b that is the transmission source of the user notification information request notification. In the case of such non-existence, the user notification information transmitter 403 may transmit, via the communication interface 41 to the wireless terminal 2b that is the transmission source of the user notification information request notification, reply information indicating that the corresponding user notification information does not exist.

In the case in which the user notification information is transmitted from the server 4, the user notification information acquirer 208a receives and acquires this user notification information via the second communication interface 26, and supplies the acquired user notification information to the information display unit 205a.

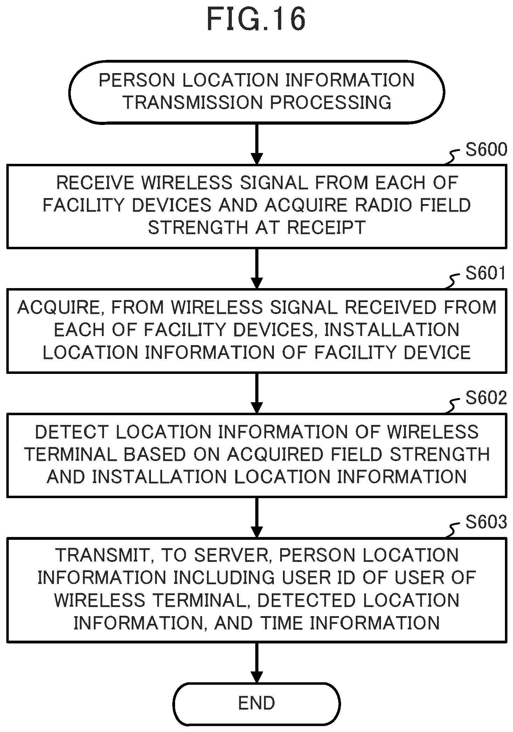

FIG. 16 is a flowchart illustrating a sequence of person location information transmission processing executed by the wireless terminal 2b. Upon startup of the location management application by an operation by the user, the wireless terminal 2b executes the person location information transmission processing repeatedly and periodically, for example, at one-minute intervals.

### Step S600

The wireless terminal 2b receives the wireless signal transmitted from each of the facility devices 3b and measures and acquires a radio field strength at receipt of the wireless signal. Thereafter, the processing by the wireless terminal 2b proceeds to step S601.

### Step S601

The wireless terminal 2b extracts and acquires, from the wireless signal received from each of the facility devices 3b, the installation location information of the facility device 3b. Thereafter, the processing by the wireless terminal 2b proceeds to step S602.

### Step S602

The wireless terminal 2b detects, based on the radio field strengths and the installation location information acquired from the three or more facility devices 3b, location information indicating a local location, that is, a location of the wireless terminal 2b. Thereafter, the processing by the wireless terminal 2b proceeds to step S603.

### Step S603

The wireless terminal 2b transmits to the server 4 the person location information including (i) the user ID of the user of the local terminal, that is, the user ID read out from the information storage 240, (ii) the detected location information, and (iii) the time information, and ends the person location information transmission processing in the current cycle. Upon receiving the person location information transmitted from the wireless terminal 2b, the server 4 stores the received person location information in the information storage 420 in a time series for each user ID.

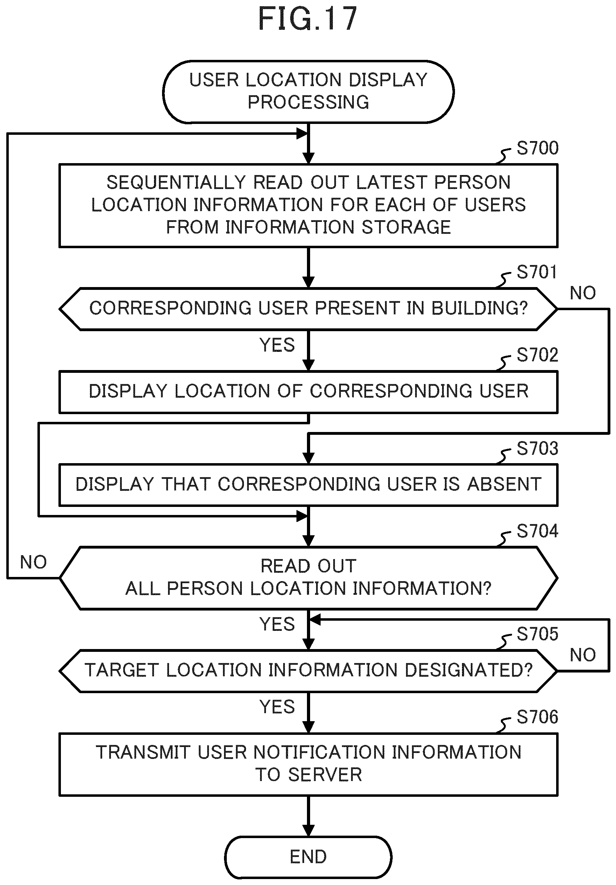

FIG. 17 is a flowchart illustrating a sequence of user location display processing executed by the wireless terminal 2b. The wireless terminal 2b executes the user location display processing upon an operation by the user to request display of a location of each of the users.

### Step S700

The wireless terminal 2b sequentially reads out the latest person location information for each of the users stored in the information storage 240. Thereafter, the processing by the wireless terminal 2b proceeds to step S701.

### Step S701

The wireless terminal 2b determines, based on the latest person location information that is read out, whether the corresponding user is present in the building B. When the corresponding user is present in the building B (YES in step S701), the processing by the wireless terminal 2b proceeds to step S702. Conversely, when the corresponding user is absent from the building B (NO in step S701), the processing by the wireless terminal 2b proceeds to step S703.

### Step S702

The wireless terminal 2b displays, on the display 22 in a predetermined manner, a location of the corresponding user. Thereafter, the processing by the wireless terminal 2b proceeds to step S704.

### Step S703

The wireless terminal 2b displays on the display 22 that the corresponding user is absent. Thereafter, the processing by the wireless terminal 2b proceeds to step S704.

### Step S704

The wireless terminal 2b determines whether all of the latest person location information for each of the users stored in the information storage 240 is read out. When all of the person location information is read out (YES in step S704), the processing by the wireless terminal 2b proceeds to step S705. Conversely, when readout of all of the person location information is not yet completed (NO in step S704), the processing by the wireless terminal 2b returns to step S700.

### Step S705

The wireless terminal 2b determines whether the target location information is designated by the user. When the target location information is designated by the user (YES in step S705), that is, when designation of a desired user among the users who are present in the building B other than the user and designation of the target location information are received from the user, the processing by the wireless terminal 2b proceeds to step S706. Conversely, when the designation of the target location information by the user is not made (NO in step S705), the wireless terminal 2b continuously executes the processing in step S705.

### Step S706

The wireless terminal 2b transmits, to the server 4, the user notification information that includes (i) the user ID of the designated user, (ii) the target location information, (iii) the user ID of the user having made the designation, and (iv) the time information. Thereafter, the wireless terminal 2b ends the user location display processing.

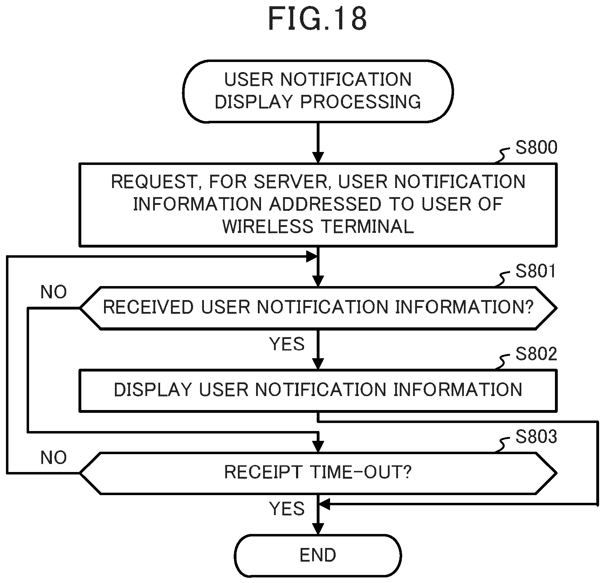

FIG. 18 is a flowchart illustrating a sequence of user notification display processing executed by the wireless terminal 2b. Upon startup of the location management application by an operation by the user, the wireless terminal 2b executes the user notification display processing repeatedly and periodically, for example, at one-minute intervals.

### Step S800

The wireless terminal 2b transmits, to the server 4, the user notification information request notification for requesting the user notification information addressed to the user of the wireless terminal 2b. Thereafter, the processing by the wireless terminal 2b proceeds to step S801.

### Step S801

The wireless terminal 2b determines whether the user notification information is received from the server 4. When the user notification information is received (YES in step S801), the processing by the wireless terminal 2b proceeds to step S802. Conversely, when the user notification information is not received (NO in step S801), the processing by the wireless terminal 2b proceeds to step S803.

### Step S802

The wireless terminal 2b displays the received user notification information on the display 22 in a predetermined manner and ends the user notification display processing in the current cycle.

### Step S803

The wireless terminal 2b determines whether receipt time-out occurs, that is, whether a predetermined receipt time-out period is elapsed after transmission of the user notification information request notification. When receipt time-out does not occur (NO in step S803), the processing by the wireless terminal 2b returns to step S801. Conversely, when receipt time-out occurs (YES in step S803), the wireless terminal 2b ends the user notification display processing in the current cycle.

As described above, in the location management system 1b according to the present embodiment, the wireless terminal 2b carried by each of the users detects the location information of the user through wireless communication with each of the facility devices 3b that are each an indoor unit, an illumination device, or the like that is installed in the building B, and transmits to the server 4 the person location information including the user ID of the user and the detected location information. The server 4 stores, in the information storage 420, the person location information transmitted from the wireless terminal 2b. Due to this configuration, the information storage 420 of the server 4 stores the person location information of each of the users. As described above, since information of a location of a person is detected using facility devices that are generally installed in a building such as an office building, low-cost management of a location of a person in the building B can be achieved.

Furthermore, the wireless terminal 2b acquires the person location information of each of the users from the server 4 and determines for each of the users whether the user is present in the building B based on the acquired person location information of the user. Additionally, the wireless terminal 2b displays, for the user present in the building B, the location of this user on the display 22 in a manner in which this user is identifiable, and displays, for the user absent from the building B, on the display 22 that this user is absent. This configuration enables easily grasping whereabouts of each of the users in the building B, enabling easy grasping of, for example, whereabouts of each worker in a free address office, attendance of workers in an office in the case of employment of both teleworking and in-office working, or the like.

Furthermore, the wireless terminal 2b receives, from the user, designation of a desired user among the users who are present in the building B other than the user and designation of the target location information, and transmits, to the server 4, the user notification information that includes (i) the user ID of the designated user and (ii) the designated target location information. The server 4 stores, in the information storage 420, the user notification information transmitted from the wireless terminal 2b. Additionally, the wireless terminal 2b acquires from the server 4 the user notification information addressed to the user of the wireless terminal 2b and displays the acquired user notification information on the display 22 in a predetermined manner. This configuration allows the user to easily send, to a desired user, notification for gathering at a desired place.

Furthermore, the wireless terminal 2b detects contact between the users in the building B based on the history of the person location information for each of the users and displays, on the display 22 in a predetermined manner, information based on a result of the detection. This configuration enables easily grasping a state of contact between the users using the building B.

Furthermore, the wireless terminal 2b acquires a person count for a designated area in the building B at a designated time or a designated time slot based on the history of the person location information for each of the users and displays, on the display 22 in a predetermined manner, information based on a result of the acquisition. This configuration enables easily grasping a state of a user count for a desired area in the building B.

Furthermore, since each of the facility devices 3b may be any device that at least has configuration for periodically transmitting a wireless signal including the installation location information of the local device, further reduction in installation cost and engineering cost can be achieved.

### Modified Example 1

The wireless terminal 2b may store in advance, in the information storage 240, information associating a device ID of each of the facility devices 3b with the installation location information of the facility device 3b. In this case, the information storage 320 of each of the facility devices 3b stores the device ID instead of the installation location information and each of the facility devices 3b periodically transmits a wireless signal including the device ID.

### Modified Example 2

Configuration for management of a location of an article installed in the building B, such as a sensor, office furniture or a fixture, may be used. In the case of this configuration, this article includes a communication device for wireless communication with the facility devices 3b and the server 4. This communication device detects location information of the article through wireless communication with each of the facility devices 3b and transmits, to the server 4, article location information including identification information of the article and the detected location information. The server 4 stores in the information storage 420 the article location information transmitted from the communication device. The communication device may be removably attached to the article.

### Modified Example 3

Instead of periodically acquiring from the server 4 the history of the person location information for each user ID, the person location information acquirer 203b of the wireless terminal 2b may (i) periodically acquire, from the server 4, the latest person location information for each user ID and (ii) upon the user performing the operation requesting display of the contact information or the operation requesting display of the area person count, acquire from the server 4 the history of the person location information for each user ID.

### Modified Example 4

Instead of periodically acquiring from the server 4 the history of the person location information for each user ID, the person location information acquirer 203b of the wireless terminal 2b may (i) periodically acquire, from the server 4, the latest person location information for each user ID and (ii) store the acquired person location information in the information storage 240 in a time series.

### Modified Example 5

The server 4 may include functional elements similar to a part of the functional elements included in the wireless terminal 2b, for example, similar to the presence-absence determiner 204, the contact detector 209, the area person count acquirer 210, and the like, to perform determination for each of the users whether the user is present in the building B, detection of contact between the users in the building B, acquisition of a person count for a designated area in the building B, and the like. In the case of this configuration, in response to a request from the wireless terminal 2b, the server 4 transmits, to this wireless terminal 2b, information indicating for each of the users whether the user is present in the building B, the unspecific contact information or the specific contact information, information indicating an area person count, and the like.

### Modified Example 6

Functional elements of the wireless terminal 2b as illustrated in FIG. 15 may be achieved wholly or partially by dedicated hardware. Additionally, functional elements of the facility device 3b as illustrated in FIG. 15 may be achieved wholly or partially by dedicated hardware. Moreover, functional elements of the server 4 as illustrated in FIG. 15 may be achieved wholly or partially by dedicated hardware. The dedicated hardware is, for example, a single circuit, a composite circuit, a programmed processor, an ASIC, an FPGA, or a combination thereof.

The technical concepts according to the above modified examples may be achieved separately of one another or may be achieved in an appropriate combination.

The foregoing describes some example embodiments for explanatory purposes. Although the foregoing discussion has presented specific embodiments, persons skilled in the art will recognize that changes may be made in form and detail without departing from the scope of the claims. Accordingly, the specification and drawings are to be regarded in an illustrative rather than a restrictive sense. This detailed description, therefore, is not to be taken in a limiting sense, and the scope of the invention is defined only by the included claims.

### Industrial Applicability

The present disclosure can be suitably used for a system for managing a location of a person in a building.

### Reference Signs List

1, 1a, 1b Location management system
2, 2a, 2b Wireless terminal
3, 3a, 3b Facility device
4 Server
20, 30, 40 Control circuit
21, 31, 41 Communication interface
22 Display
23 Operation receiver
24, 32, 42 Auxiliary storage device
25 First communication interface
26 Second communication interface
200 Wireless signal receiver
201 Location information detector
202, 202a, 302, 302a, 401 Person location information transmitter
203, 203a, 203b Person location information acquirer
204 Presence-absence determiner
205, 205a Information display unit
206 Target location information receiver
207, 207a, 304, 403 User notification information transmitter
208, 208a User notification information acquirer
209 Contact detector
210 Area person count acquirer
240, 320, 420 Information storage
300 Wireless signal transmitter
301, 301a, 400 Person location information storing unit
303, 402 User notification information storing unit

## Claims

1. A location management system (1, 1a) comprising:
a wireless terminal (2, 2a) among a plurality of wireless terminals corresponding to a plurality of users ; and
a facility device (3, 3a) installed in a building, wherein
the wireless terminal (2, 2a) includes
a display (22),
storage means (240) for storing user identification information of a user of the wireless terminal (2, 2a);
communication means (21) for performing wireless communication with a facility device (3, 3a);
location information detection means (201) for detecting, based on the wireless communication with the facility device (3, 3a), location information of the wireless terminal (2, 2a),
person location information transmission means (202) for transmitting, to the facility device (3, 3a), person location information that includes the user identification information and the location information of the wireless terminal (2, 2a),
person location information acquisition means (203, 203a) for acquiring, from the facility device (3, 3a), the person location information for each of the plurality of users,
presence-absence determination means (204) for determining, for each of the plurality of users, whether the user is present in the building, based on the acquired person location information for the user, and
information display means (205, 205a) for displaying on the display (22) a location of each of users present in the building, in a manner in which the user present in the building is identifiable, and
the facility device (3, 3a) includes
communication means (31) for performing wireless communication with the wireless terminal (2, 2a), and
storage means (320) for storing the person location information received from the wireless terminal (2, 2a).

2. The location management system (1, 1a) according to claim 1, wherein
each of the plurality of wireless terminals (2, 2a) further includes
target location information receiving means (206) for receiving, from the user of the wireless terminal (2, 2a), designation of a desired user among the users present in the building and designation of target location information, and
user notification information transmission means (207) for transmitting, to the facility device (3, 3a), user notification information that includes the user identification information of the designated user and the designated target location information, and
the storage means (320) of the facility device (3, 3a) further stores the user notification information received from the plurality of wireless terminals (2, 2a).

3. The location management system (1, 1a) according to claim 2, wherein
each of the wireless terminals (2, 2a) acquires, from the facility device (3, 3a), the user notification information addressed to the user of the wireless terminal (2, 2a), and
the information display means (205, 205a) displays the acquired user notification information on the display (22) in a predetermined manner.

4. The location management system (1a) according to any one of claims 1 to 3, wherein
each of the plurality of wireless terminals (2a) further includes contact detection means (209) for detecting, based on a history of the person location information of each of the plurality of users, contact between the plurality of users in the building, and
the information display means (205a) of each of the wireless terminals (2a) displays, on the display (22) in a predetermined manner, information based on a result of the detection by the contact detection means (209).

5. The location management system (1a) according to any one of claims 1 to 4, wherein
each of the plurality of wireless terminals (2a) further includes area person count acquisition means (210) for acquiring, based on a history of the person location information for each of the plurality of users, a person count for a designated area in the building at a designated time or in a designated time slot, and
the information display means (205a) of each of the plurality of wireless terminals (2a) displays, on the display (22) in a predetermined manner, information based on a result of the acquisition by the area person count acquisition means (210).

6. A location management method comprising:
detecting, by a wireless terminal (2, 2a), based on wireless communication with a facility device (3, 3a), location information of the wireless terminal (2, 2a), wherein the wireless terminal is a wireless terminal among a plurality of wireless terminals corresponding to a plurality of users,
transmitting, by the wireless terminal (2, 2a), to the facility device (3, 3a), person location information that includes user identification information of a user of the wireless terminal (2, 2a) and the location information of the wireless terminal (2, 2a), and
storing, by the facility device (3, 3a), in storage means (320) included in the facility device (3, 3a), the person location information received from the wireless terminal (2, 2a), wherein
the wireless terminal (2, 2a)
acquires, from the facility device (3, 3a), the person location information for each of the plurality of users,
determines, for each of the plurality of users, whether the user is present in the building, based on the acquired person location information for the user, and
displays on the display (22) a location of each of users present in the building, in a manner in which the user present in the building is identifiable.

## Patentansprüche

1. Ein Standortverwaltungssystem (1, 1a), umfassend:
ein drahtloses Endgerät (2, 2a) unter einer Vielzahl von drahtlosen Endgeräten, die einer Vielzahl von Benutzern entsprechen; und
eine Einrichtungsvorrichtung (3, 3a), die in einem Gebäude installiert ist,
wobei das drahtlose Endgerät (2, 2a) umfasst:
eine Anzeige (22),
Speichermittel (240) zum Speichern von Benutzeridentifikationsinformationen eines Benutzers des drahtlosen Endgeräts (2, 2a);
Kommunikationsmittel (21) zum Durchführen einer drahtlosen Kommunikation mit einer Einrichtungsvorrichtung (3, 3a);
Positionsinformations-Erfassungsmittel (201) zum Erfassen, basierend auf der drahtlosen Kommunikation mit der Einrichtungsvorrichtung (3, 3a), von Positionsinformationen des drahtlosen Endgeräts (2, 2a),
Personenpositionsinformations-Übertragungsmittel (202) zum Übertragen, an die Einrichtungsvorrichtung (3, 3a), von Personenpositionsinformationen, die die Benutzeridentifikationsinformationen und die Positionsinformationen des drahtlosen Endgeräts (2, 2a) umfassen,
Personenpositionsinformations-Erlangungsmittel (203, 203a) zum Erlangen, von der Einrichtungsvorrichtung (3, 3a), der Personenpositionsinformationen für jeden der Vielzahl von Benutzern,
Anwesenheits-/Abwesenheits-Bestimmungsmittel (204) zum Bestimmen, für jeden der Vielzahl von Benutzern, ob der Benutzer in dem Gebäude anwesend ist, basierend auf den erlangten Personenpositionsinformationen für den Benutzer, und
Informationsanzeigemittel (205, 205a) zum Anzeigen, auf der Anzeige (22), eines Standorts jedes der in dem Gebäude anwesenden Benutzer in einer Weise, in der der in dem Gebäude anwesende Benutzer identifizierbar ist, und
wobei die Einrichtungsvorrichtung (3, 3a) umfasst:
Kommunikationsmittel (31) zum Durchführen einer drahtlosen Kommunikation mit dem drahtlosen Endgerät (2, 2a), und
Speichermittel (320) zum Speichern der von dem drahtlosen Endgerät (2, 2a) empfangenen Personenpositionsinformationen.

2. Das Standortverwaltungssystem (1, 1a) nach Anspruch 1,
wobei jedes der Vielzahl von drahtlosen Endgeräten (2, 2a) ferner umfasst:
Zielpositionsinformations-Empfangsmittel (206) zum Empfangen, von dem Benutzer des drahtlosen Endgeräts (2, 2a), einer Bezeichnung eines gewünschten Benutzers unter den in dem Gebäude anwesenden Benutzern und einer Bezeichnung von Zielpositionsinformationen, und
Benutzerbenachrichtigungsinformations-Übertragungsmittel (207) zum Übertragen, an die Einrichtungsvorrichtung (3, 3a), von Benutzerbenachrichtigungsinformationen, die die Benutzeridentifikationsinformationen des bezeichneten Benutzers und die bezeichneten Zielpositionsinformationen umfassen, und
wobei die Speichermittel (320) der Einrichtungsvorrichtung (3, 3a) ferner die von der Vielzahl von drahtlosen Endgeräten (2, 2a) empfangenen Benutzerbenachrichtigungsinformationen speichern.

3. Das Standortverwaltungssystem (1, 1a) nach Anspruch 2,
wobei jedes der drahtlosen Endgeräten (2, 2a) von der Einrichtungsvorrichtung (3, 3a) die an den Benutzer des drahtlosen Endgeräts (2, 2a) adressierten Benutzerbenachrichtigungsinformationen erlangt, und
wobei die Informationsanzeigemittel (205, 205a) die erlangten Benutzerbenachrichtigungsinformationen auf der Anzeige (22) in einer vorbestimmten Weise anzeigen.

4. Das Standortverwaltungssystem (1a) nach einem der Ansprüche 1 bis 3,
wobei jedes der Vielzahl von drahtlosen Endgeräten (2a) ferner Kontakterfassungsmittel (209) zum Erfassen, basierend auf einer Historie der Personenpositionsinformationen jedes der Vielzahl von Benutzern, eines Kontakts zwischen der Vielzahl von Benutzern in dem Gebäude umfasst, und
wobei die Informationsanzeigemittel (205a) jedes der drahtlosen Endgeräten (2a) auf der Anzeige (22) in einer vorbestimmten Weise Informationen anzeigen, die auf einem Ergebnis der Erfassung durch die Kontakterfassungsmittel (209) basieren.

5. Das Standortverwaltungssystem (1a) nach einem der Ansprüche 1 bis 4,
wobei jedes der Vielzahl von drahtlosen Endgeräten (2a) ferner Bereichspersonenzahl-Erlangungsmittel (210) zum Erlangen, basierend auf einer Historie der Personenpositionsinformationen für jeden der Vielzahl von Benutzern, einer Personenzahl für einen bezeichneten Bereich in dem Gebäude zu einer bezeichneten Zeit oder in einem bezeichneten Zeitfenster umfasst, und
wobei die Informationsanzeigemittel (205a) jedes der Vielzahl von drahtlosen Endgeräte (2a) auf der Anzeige (22) in einer vorbestimmten Weise Informationen anzeigen, die auf einem Ergebnis der Erlangung durch die Bereichspersonenzahl-Erlangungsmittel (210) basieren.

6. Ein Standortverwaltungsverfahren, umfassend:
Erfassen, durch ein drahtloses Endgerät (2, 2a), basierend auf einer drahtlosen Kommunikation mit einer Einrichtungsvorrichtung (3, 3a), von Positionsinformationen des drahtlosen Endgeräts (2, 2a), wobei das drahtlose Endgerät ein drahtloses Endgerät unter einer Vielzahl von drahtlosen Endgeräten ist, die einer Vielzahl von Benutzern entsprechen,
Übertragen, durch das drahtlose Endgerät (2, 2a), an die Einrichtungsvorrichtung (3, 3a), von Personenpositionsinformationen, die Benutzeridentifikationsinformationen eines Benutzers des drahtlosen Endgeräts (2, 2a) und die Positionsinformationen des drahtlosen Endgeräts (2, 2a) umfassen, und
Speichern, durch die Einrichtungsvorrichtung (3, 3a), in Speichermitteln (320), die in der Einrichtungsvorrichtung (3, 3a) enthalten sind, der von dem drahtlosen Endgerät (2, 2a) empfangenen Personenpositionsinformationen,
wobei das Verfahren ferner umfasst, durch das drahtlose Endgerät (2, 2a):
Erlangen der Personenpositionsinformationen für jeden der Vielzahl von Benutzern von der Einrichtungsvorrichtung (3, 3a),
Bestimmen, für jeden der Vielzahl von Benutzern, ob der Benutzer in dem Gebäude anwesend ist, basierend auf den erlangten Personenpositionsinformationen für den Benutzer, und
Anzeigen eines Standorts jedes der in dem Gebäude anwesenden Benutzer auf der Anzeige (22) in einer Weise, in der der in dem Gebäude anwesende Benutzer identifizierbar ist.

## Revendications

1. Système de gestion de localisation (1, 1a) comprenant :
un terminal sans fil (2, 2a) parmi une pluralité de terminaux sans fil correspondant à une pluralité d'utilisateurs ; et
un dispositif d'installation (3, 3a) installé dans un bâtiment, dans lequel
le terminal sans fil (2, 2a) comporte
un dispositif d'affichage (22),
des moyens de stockage (240) pour stocker des informations d'identification d'utilisateur d'un utilisateur du terminal sans fil (2, 2a) ;
des moyens de communication (21) pour réaliser une communication sans fil avec un dispositif d'installation (3, 3a) ;
des moyens de détection d'informations de localisation (201) pour détecter, sur la base de la communication sans fil avec le dispositif d'installation (3, 3a), des informations de localisation du terminal sans fil (2, 2a),
des moyens de transmission d'informations de localisation de personne (202) pour transmettre, au dispositif d'installation (3, 3a), des informations de localisation de personne qui incluent les informations d'identification d'utilisateur et les informations de localisation du terminal sans fil (2, 2a),
des moyens d'acquisition d'informations de localisation de personne (203, 203a) pour acquérir, à partir du dispositif d'installation (3, 3a), les informations de localisation de personne pour chacun de la pluralité d'utilisateurs,
des moyens de détermination de présence-absence (204) pour déterminer, pour chacun de la pluralité d'utilisateurs, si l'utilisateur est présent dans le bâtiment, sur la base des informations de localisation de personne acquises pour l'utilisateur, et
des moyens d'affichage d'informations (205, 205a) pour afficher sur l'écran (22) un emplacement de chacun des utilisateurs présents dans le bâtiment, de manière à ce que l'utilisateur présent dans le bâtiment soit identifiable, et
le dispositif d'installation (3, 3a) comporte
des moyens de communication (31) pour réaliser une communication sans fil avec le terminal sans fil (2, 2a), et
des moyens de stockage (320) pour stocker les informations de localisation de personne reçues à partir du terminal sans fil (2, 2a).

2. Système de gestion de localisation (1, 1a) selon la revendication 1, dans lequel
chacun de la pluralité de terminaux sans fil (2, 2a) comporte en outre
des moyens de réception d'informations de localisation cible (206) pour recevoir, à partir de l'utilisateur du terminal sans fil (2, 2a), une désignation d'un utilisateur souhaité parmi les utilisateurs présents dans le bâtiment et une désignation d'informations de localisation cible, et
des moyens de transmission d'informations de notification d'utilisateur (207) pour transmettre, au dispositif d'installation (3, 3a), des informations de notification d'utilisateur qui incluent les informations d'identification d'utilisateur de l'utilisateur désigné et les informations de localisation cible désignées, et
les moyens de stockage (320) du dispositif d'installation (3, 3a) stockent en outre les informations de notification d'utilisateur reçues à partir de la pluralité de terminaux sans fil (2, 2a).

3. Système de gestion de localisation (1, 1a) selon la revendication 2, dans lequel
chacun des terminaux sans fil (2, 2a) acquiert, à partir du dispositif d'installation (3, 3a), les informations de notification d'utilisateur adressées à l'utilisateur du terminal sans fil (2, 2a), et
les moyens d'affichage d'informations (205, 205a) affichent les informations de notification d'utilisateur acquises sur le dispositif d'affichage (22) de manière prédéterminée.

4. Système de gestion de localisation (1a) selon l'une quelconque des revendications 1 à 3, dans lequel
chacun de la pluralité de terminaux sans fil (2a) comporte en outre des moyens de détection de contact (209) pour détecter, sur la base d'un historique des informations de localisation de personne de chacun de la pluralité d'utilisateurs, un contact entre la pluralité d'utilisateurs dans le bâtiment, et
les moyens d'affichage d'informations (205a) de chacun des terminaux sans fil (2a) affichent, sur le dispositif d'affichage (22) de manière prédéterminée, des informations sur la base d'un résultat de la détection par les moyens de détection de contact (209).

5. Système de gestion de localisation (1a) selon l'une quelconque des revendications 1 à 4, dans lequel
chacun de la pluralité de terminaux sans fil (2a) comporte en outre des moyens d'acquisition de comptage de personnes de zone (210) pour acquérir, sur la base d'un historique des informations de localisation de personne pour chacun de la pluralité d'utilisateurs, un comptage de personnes pour une zone désignée dans le bâtiment à un moment désigné ou dans un créneau temporel désigné, et
les moyens d'affichage d'informations (205a) de chacun de la pluralité de terminaux sans fil (2a) affichent, sur le dispositif d'affichage (22) de manière prédéterminée, des informations sur la base d'un résultat de l'acquisition par les moyens d'acquisition de comptage de personnes de zone (210).

6. Méthode de gestion de localisation comprenant :
la détection, par un terminal sans fil (2, 2a), sur la base d'une communication sans fil avec un dispositif d'installation (3, 3a), d'informations de localisation du terminal sans fil (2, 2a), dans laquelle terminal sans fil est un terminal sans fil parmi une pluralité de terminaux sans fil correspondant à une pluralité d'utilisateurs,
la transmission, par le terminal sans fil (2, 2a) au dispositif d'installation (3, 3a), d'informations de localisation de personne qui incluent des informations d'identification d'utilisateur d'un utilisateur du terminal sans fil (2, 2a) et les informations de localisation du terminal sans fil (2, 2a), et
le stockage, par le dispositif d'installation (3, 3a), dans des moyens de stockage (320) inclus dans le dispositif d'installation (3, 3a), les informations de localisation de personne reçues à partir du terminal sans fil (2, 2a), dans laquelle
le terminal sans fil (2, 2a)
acquiert, à partir du dispositif d'installation (3, 3a), les informations de localisation de personne pour chacun de la pluralité d'utilisateurs,
détermine, pour chacun de la pluralité d'utilisateurs, si l'utilisateur est présent dans le bâtiment, sur la base des informations de localisation de personne acquises pour l'utilisateur, et
affiche, sur le dispositif d'affichage (22), un emplacement de chacun des utilisateurs présents dans le bâtiment, de manière à ce que l'utilisateur présent dans le bâtiment soit identifiable.
